# EUROPÄISCHE PATENTSCHRIFT

(11) **EP 1 142 947 B1**
(45) Veröffentlichungstag und Bekanntmachung des Hinweises auf die Patenterteilung: **10.09.2003**
(21) Anmeldenummer: 01106401.1
(22) Anmeldetag: 21.03.2001
(51) Int. Cl.: C08K 5/101, C08L 75/14, C09D 175/14

(54) **Polyurethan-Dispersionen**
Polyurethane dispersions
Dispersions en polyurethane

(30) Priorität: 03.04.2000 DE 10016548
(43) Veröffentlichungstag der Anmeldung: 10.10.2001
(73) Patentinhaber: BAYER AG, 51368 Leverkusen (DE)
(72) Erfinder: Weikard, Jan, Dr., 51519 Odenthal (DE); Lühmann, Erhard, 51375 Leverkusen (DE); Kremer, Wolfgang, 47647 Kerken (DE); Meixner, Jürgen, Dr., 47803 Krefeld (DE)

(56) Entgegenhaltungen:
- EP-A- 0 942 022
- DE-A- 19 649 394
- JP-A- 5 263 012

## Beschreibung

Die Erfindung betrifft wässrige Polyurethan-Dispersionen, die unter dem Einfluss energiereicher Strahlung aushärten und ihre Verwendung als Beschichtungsmittel. Sie kommen beispielsweise in der Holz- und Möbellackierung zum Einsatz.

Strahlungshärtbare Polyurethan-Dispersionen werden in EP-A 0 704 469, EP-A 0 753 531, EP-A 0 870 788, EP-A 0 872 502 und EP-A 0 942 022 beschrieben. Die dort beschriebenen Polyurethan-Dispersionen trocknen nach Abdunsten des Wassers und vor UV-Härtung bereits stark physikalisch an und zeigen nur geringe Penetration auf saugenden Untergründen wie Holz. Es kommt daher bei solchen Lacken nur zu einer unzureichenden Betonung der natürlichen Struktur des Holzes, die dem Fachmann als "Anfeuerung" (Römpp Lexikon der Lacke & Druckfarben, Ulrich Zorl [Hrsg.], Stuttgart, New York, Thieme 1998, Stichwort "Holzlacke" S. 289) bekannt ist.

Aus der EP-A-0 012 339 sind wässrige Dispersionen auf Basis strahlungshärtbarer Prepolymere bekannt, die durch Dispergierhilfsmittel wie Polyvinylpyrrolidone stabilisiert werden. Diese Dispersionen zeigen zwar auf Holz eine gute Anfeuerung, aber sie trocknen durch Wasserabgabe kaum an, was im industriellen Lackierprozess äußerst ungünstig ist, da nicht gehärtete Lackoberflächen empfindlich sind gegen Staub und andere Störungen, die bei Handhabung oder Bewegung auftreten können. Darüber hinaus bleibt nach Abdunsten des Wassers durch die Verwendung der Dispergierhilfsmittel eine nicht unerhebliche Wassermenge im Film zurück, die bei der Härtung durch UV-Licht zur Störung der Filmoptik und -härte führen kann.

Die beschriebenen Systeme trocknen also entweder physikalisch an, zeigen aber mangelhafte Anfeuerung oder sie zeigen gute Anfeuerung, trocknen dafür aber nicht ausreichend an.

Der vorliegenden Erfindung lag daher die Aufgabe zugrunde, strahlungshärtbare wässrige Polyurethan-Dispersionen bereitzustellen, die sowohl eine gute physikalische Antrocknung vor der Strahlenhärtung als auch eine gute Anfeuerung auf Holz zeigen.

Diese Aufgabe wird durch die erfindungsgemäße Verwendung schon geringer Mengen von 2,2-Dimethyl-3-hydroxypropionsäure-(2,2-dimethyl-3-hydroxypropylester) in strahlungshärtbaren wässrigen Polyurethan-Dispersionen gelöst, denn überraschenderweise führt diese bei physikalisch antrocknenden, strahlungshärtbaren wässrigen Polyurethan-Dispersionen zu einer stark verbesserten Anfeuerung auf Holz.

Gegenstand der Erfindung ist daher die Verwendung von bis zu 20 Gew.-% 2,2-Dimethyl-3-hydroxypropionsäure-(2,2-dimethyl-3-hydroxypropylester) (HPSNPG) (berechnet als M = 204,3) in strahlungshärtbaren, wässrigen Polyurethan-Dispersionen. Bevorzugt enthalten die nichtwässrigen Bestandteile 0,05 - 20 Gew.% 2,2-Dimethyl-3-hydroxypropionsäure-(2,2-dimethyl-3-hydroxypropylester) (berechnet als M = 204,3). Das HPSNPG kann auch in Form von Umsetzungsprodukten mit Isocyanatgruppen-haltigen Verbindungen eingesetzt werden.

Gegenstand der Erfindung ist auch ein Verfahren zur Erzeugung von gut anfeuernden Beschichtungen auf Holzoberflächen mit strahlungshärtbaren Polyurethan-Dispersionen dadurch gekennzeichnet, dass die Polyurethan-Dispersionen in ihren nichtwässrigen Bestandteilen bis zu 20 Gew.% 2,2-Dimethyl-3-hydroxypropionsäure(2,2-dimethyl-3-hydroxypropylester) (berechnet als M = 204,3) bzw. deren Umsetzungsprodukte mit Isocyanatgruppen-haltigen Verbindungen enthalten.

Die Herstellung von Polyurethan-Dispersionen ist bekannt und z.B. beschrieben in Methoden der organischen Chemie (Houben-Weyl, Erweiterungs- und Folgebände zur 4. Auflage, Band E20, H. Bartl und J. Falbe [Hrsg.], Stuttgart, New York, Thieme 1987, S. 1659 - 1693). Polyurethan-Dispersionen werden durch Polyaddition von Di- oder Polyisocyanaten (Komponente A) mit im Mittel di- oder polyfunktionell mit Isocyanaten reaktiven Verbindungen (Komponente B) hergestellt. Die Umsetzung kann in einer oder mehreren Stufen in homogener oder - bei mehrstufiger Umsetzung - teilweise in disperser Phase durchgeführt werden. Nach vollständig oder teilweise durchgeführter Polyaddition erfolgt ein Dispergierschritt. Im Anschluss erfolgt gegebenenfalls eine weitere Polyaddition oder Modifikation in disperser Phase.

Die mit Isocyanaten-reaktiven Verbindungen der Komponente B müssen mindestens einen hydrophilierend wirkenden Bestandteil B1 enthalten. Kationisch, anionisch und/oder durch Ethergruppen dispergierend wirkende Verbindungen sind solche, die beispielsweise Sulfonium-, Ammonium-, Carboxylat-, Sulfonat-Gruppen oder die Gruppen, die durch Salzbildung in die vorgenannten Gruppen überführt werden können, und/oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen. Vertreter für solche Verbindungen (B1) sind Bis(hydroxymethyl)propionsäure, Bis(hydroxymethyl)buttersäure, Hydroxypivalinsäure, Äpfelsäure, Glykolsäure, Milchsäure, Glycin, Alanin, Taurin, 2-Aminoethylaminoethansulfonsäure, auf Alkoholen gestartete Polyethylenglykole, Polypropylenglykole und deren Blockcopolymere sowie die Monomethylether dieser Polyglykole. Besonders geeignet ist Bis(hydroxymethyl)propionsäure.

Weiterhin enthalten die mit Isocyanaten-reaktiven Verbindungen der Komponente B mindestens eine Verbindung B2, die auch radikalisch polymerisierbare Doppelbindungen, bevorzugt Acrylate oder Methacrylate, enthält. Beispiele für solche Verbindungen sind die Mono-(Meth)acrylate zweiwertiger Alkohole wie z.B. Ethandiol, die isomeren Propandiole und Butandiole, oder (Meth)acrylate mehrwertiger Alkohole wie z.B. Trimethylolpropan, Glycerin und Pentaerythrit, die freie Hydroxylgruppen enthalten.

Weiterhin können vorteilhaft hydroxylgruppenhaltige Polyesteracrylate mit einem OH-Gehalt von 30-300 mg KOH/g eingesetzt werden. Bei der Herstellung der hydroxyfunktionellen Polyesteracrylate können insgesamt 7 Gruppen von Monomerbestandteilen zur Anwendung kommen:
1. (Cyclo)Alkandiole (d. h. zweiwertige Alkohole mit (cyclo)aliphatisch gebundenen Hydro-xylgruppen) des Molekulargewichtsbereichs 62 bis 286, wie z. B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2-und 1,4-Cyclohexandiol, 2-Ethyl-2-butylpropandiol, Ethersauerstoff enthaltende Diole, wie z. B. Diethylenglykol, Triethylenglykol, Tetraethy-lenglykol, Dipropylenglykol, Tripropylenglykol, Polyethylen-, Polypropylen- oder Polybutylenglykole mit einem maximalen Molekulargewicht von ca. 2000, vorzugsweise ca. 1000 und besonders bevorzugt ca. 500. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs 92 bis 254, wie z. B. Glycerin, Trimethylolpropan, Pentaerythrit, Dipentaerythrit und Sorbit oder auf diesen Alkoholen gestartete Polyether wie z.B. das Umsetzungsprodukt von 1 mol Trimethylolpropan mit 4 mol Ethylenoxid.
3. Monoalkohole wie z. B. Ethanol, 1- und 2-Propanol, 1- und 2-Butanol, 1-Hexanol, 2-Ethylhexanol, Cyclohexanol und Benzylalkohol.
4. Dicarbonsäuren des Molekulargewichtsbereichs 104 bis ca. 600 und/oder deren Anhydride, wie z. B. Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren bzw. deren Anhydride wie z. B. Trimellithsäure und Tri-mellithsäureanhydrid.
6. Monocarbonsäuren, wie z. B. Benzoesäure, Cyclohexancarbonsäure, 2-Ethylhexansäure, Capronsäure, Caprylsäure, Caprinsäure, Laurinsäure, natürliche und synthetische Fettsäuren.
7. Acrylsäure, Methacrylsäure bzw. dimere Acrylsäure.

Hydroxylgruppenhaltigen Polyesteracrylaten enthalten das Umsetzungsprodukt von mindestens einem Bestandteil aus Gruppe 1 oder 2 mit mindestens einem Bestandteil aus Gruppe 4 oder 5 und mindestens einem Bestandteil aus Gruppe 7.

Es können in diese Polyesteracrylate auch aus dem Stand der Technik allgemein bekannte, so beispielsweise in Progress in Organic Coatings, 9 (1981), 291- 296 beschrieben, dispergierend wirkende Gruppen eingebaut werden. So können als Alkoholkomponente anteilig Polyethylenglykole und/oder Methoxypolyethylenglykole eingbaut werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol 1500 und/oder Polyethylenglykol-500-mono-methylether.

Weiterhin ist es möglich, einen Teil von (überschüssigen) Carboxylgruppen, insbesondere die der (Meth)acrylsäure, mit Mono-, Di- oder Polyepoxiden umzusetzen. Diese Reaktion kann insbesondere zur Erhöhung der OH-Zahl des Polyesteracrylats verwendet werden, da bei der Epoxid-Säure-Reaktion jeweils eine OH-Gruppe entsteht. Die Säurezahl des resultierenden Produkts liegt unter 20 mg KOH/g, vorzugsweise unter 10 mg KOH/g und besonders bevorzugt unter 5 mg KOH/g.

Die Herstellung von Polyesteracrylaten wird in DE-A-4 040 290, DE-A-3 316 592 und P. K. T. Oldring (Ed.), Chemistry & Technology of UV & EB Formulations For Coatings, Inks & Paints, Vol. 2, 1991, SITA Technology, London, S. 123 - 135 beschrieben.

Alternativ können auch an sich bekannte hydroxylgruppenhaltige Epoxyacrylate, hydroxylgruppenhaltige Polyetheracrylate oder hydroxylgruppenhaltige Polyurethanacrylate mit OH-Gehalten von 20 bis 300 mg KOH/g eingesetzt werden sowie deren Mischungen untereinander und Mischungen mit hydroxylgruppenhaltigen ungesättigten Polyestern sowie Mischungen mit Polyesteracrylaten oder Mischungen hydroxylgruppenhaltiger ungesättigter Polyester mit Polyesteracrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London beschrieben.

Erfindungsgemäße strahlungshärtbare Polyurethan-Dispersionen enthalten als Bestandteil der Komponente B 2,2-Dimethyl-3-hydroxypropionsäure-(2,2-dimethyl-3-hydroxypropylester) (Komponente B3) in einer solchen Menge, dass die Polyurethan-Dispersion in ihren nichtwässrigen Bestandteilen bis zu 20 Gew.%, votreilhaft 0,05-20 Gew.%, bevorzugt 0,1 -10 Gew.%, besonders bevorzugt 0,5-5 Gew.% 2,2-Dimethyl-3-hydroxypropionsäure-(2,2-dimethyl-3-hydroxypropylester) (berechnet als M = 204,3) bzw. dessen Umsetzungsprodukte mit Isocyanatgruppen-haltigen Verbindungen enthält.

Weiterhin können in Komponente B auch anteilig, d.h. weniger als 30 Gew.-%, bevorzugt weniger als 10 Gew.-%, Diole mit kurzen Alkylketten (Komponente B4) (2 bis 10 Kohlenstoffatome) enthalten sein. Beispiele für solche Diole sind Ethylenglykol, Di- oder Triethylenglykol, 1,3- oder 1,4-Butandiol, Neopentylglykol, 1,6-Hexandiol oder Mischungen solcher Diole.

Weiterhin können in Komponente B auch anteilig, d.h. weniger als 60 Gew.-%, bevorzugt weniger als 30 Gew.-%, aus der Polyurethanchemie an sich bekannte höhermolekulare Di- oder Polyole (Komponente B5) mit einem zahlenmittleren Molekulargewicht im Bereich von etwa 400 bis 8000 g/mol, bevorzugt 500 bis 4000 g/mol, eingesetzt werden. Bevorzugt werden Polymere mit einer Hydroxylfunktionalität gleich oder nahe bei 2. Dazu zählen z.B. Polyesteralkohole auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis; weiterhin Polyetherole, die durch Polymerisation von cyclischen Ethern oder durch Umsetzung von Alkylenoxiden mit einem Startermolekül erhältlich sind; weiterhin Hydroxyl-terminierte Polycarbonate, die durch Umsetzung von Diolen oder auch Lacton-modifizierten Diolen oder auch Bisphenolen, wie z.B. Bisphenol A, mit Phosgen oder Kohlensäurediestern wie Diphenylcarbonat oder Dimethylcarbonat zugänglich sind; weiterhin Hydroxyl-terminierte Polyamidalkohole und Hydroxyl-terminierte Polyacrylatdiole (z.B. Tegomer® BD 1000, (Tego GmbH, Essen).

Di- und/oder Polyamine (Komponente B6) als Bestandteile der Komponente B dienen zum Erhöhen der Molmasse und werden bevorzugt gegen Ende der Polyadditionsreaktion zugegeben. Bevorzugt findet diese Reaktion im wässrigen Medium statt. Dann müssen die Di- und/oder Polyamine reaktiver als Wasser gegenüber den Isocyanatgruppen der Komponente A sein. Exemplarisch seien genannt Ethylendiamin, 1,6-Hexamethylendiamin, Isophorondiamin, 1,3-, 1,4-Phenylendiamin, 4,4'-Diphenylmethandiamin, aminofunktionelle Polyethylenoxide bzw. Polypropylenoxide (bekannt unter dem Namen Jeffamin®, D-Reihe, (Huntsman Corp. Europe, Zavantem, Belgien)), Triethylentetramin und Hydrazin. Besonders bevorzugt ist Ethylendiamin.

Anteilig können auch Monoamine, wie z. B. Butylamin, Ethylamin und Amine der Jeffamin® M-Reihe (Huntsman Corp. Europe, Zavantem, Belgien), aminofunktionelle Polyethylenoxide und Polypropylenoxide zugesetzt werden.

Die Polyaddition kann mit aromatischen, araliphatischen, aliphatischen oder cycloaliphatischen Polyisocyanaten (Komponente A) erfolgen. Es können auch Mischungen solcher Polyisocyanate eingesetzt werden. Beispiele geeigneter Polyisocyanate sind Butylendiisocyanat, Hexamethylendiisocyanat (HDI), Isophorondisocyanat (IPDI), Trimethylhexamethylendiisocyanat (entspr. 2,2,4 und/oder 2,4,4-Trimethylhexamethylendiisocyanat), die isomeren Bis(4,4'-isocyanatocyclohexyl)methane, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben. Bevorzugt sind Hexamethylendiisocyanat, Isophorondiisocyanat und die isomeren Bis(4,4'-isocyanatocyclohexyl)methane sowie deren Mischungen.

Zur Herstellung der erfindungsgemäßen Polyurethan-Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren bzw. Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe [Hrsg.], Stuttgart, New York, Thieme 1987, S. 1671 - 1682). Erfahrungsgemäß am besten geeignet ist das Schmelz-Emulgier- und das Aceton-Verfahren. Besonders bevorzugt wird das Aceton-Verfahren.

Die Komponenten A und B ohne B6 werden zur Herstellung der Vorprodukte (Präpolymer) im Reaktor vorgelegt, falls das Verfahren es erfordert (z.B. beim Acetonverfahren, gegebenenfalls auch beim Schmelz-Emulgierverfahren) mit einem mit Wasser mischbaren aber gegenüber Isocyanatgruppen inerten Lösungsmittel verdünnt, beim Schmelz-Emulgierverfahren bevorzugt aber ohne Lösungsmittel, auf höhere Temperaturen, besonders im Bereich von 50 bis 120°C, aufgeheizt. Geeignete Lösungsmittel sind z.B. Aceton, Butanon, Tetrahydrofuran, Dioxan, Acetonitril, Dipropylenglykoldimethylether und 1-Methyl-2-pyrrolidon. Weiterhin können die zum Beschleunigen der Isocyanatadditionsreaktion bekannten Katalysatoren wie z. B. Triethylamin, 1,4-Diazabicyclo-[2,2,2]-oktan, Zinndioktoat oder Dibutylzinndilaurat mit vorgelegt werden. Zu diesen Mischungen tropft man das oder die Polyisocyanate (A). Die molaren Verhältnisse von gegenüber Isocyanaten reaktiven Gruppen in (B) zu Iscocyanatgruppen in (A) betragen von 1 : 1 bis 1 : 5, bevorzugt 1 1,1 bis 1 : 1,5. Die Umsetzung der Komponenten (A) mit (B) wird bis zu einem Umsetzungsgrad von 65 bis 100%, bevorzugt 80 bis 100% bezogen auf die Gesamtmenge an NCO-Gruppen in (A) durchgeführt. Es kann auch in einer Variante des Verfahrens solange umgesetzt werden, bis der NCO-Gehalt der Reaktionsmischung konstant bleibt.

Der Umsetzungsgrad wird üblicherweise durch Verfolgung des NCO-Gehalts der Reaktionsmischung überwacht. Dazu können sowohl spektroskopische Messungen (IR- oder NIR-Spektren) als auch chemische Analysen (Titrationen) von entnommenen Proben vorgenommen werden. Nach Erreichen des gewünschten NCO-Gehalts wird durch möglichst zügiges Absenken der Temperatur die weitere Umsetzung von (A) mit (B) stark verlangsamt. Wie weit die Reaktionstemperatur abgesenkt werden muss, richtet sich nach den verwendeten Reaktionspartnern (insbesondere die Reaktivität verschiedener Isocyanate kann sehr unterschiedlich sein) und kann durch weitere Verfolgung des NCO-Gehalts der Mischung überprüft werden.

Nach der Herstellung der Präpolymere aus (A) und (B) erfolgt, falls dies noch nicht in den Ausgangsmolekülen durchgeführt wurde, die Salzbildung der anionisch und/oder kationisch dispergierend wirkenden Zentren der Verbindungen (B). Im Falle anionischer Zentren sind dazu Basen wie Ammoniak, Triethylamin, Triethanolamin, Kaliumhydroxid oder Natriumcarbonat und im Falle kationischer Zentren Schwefelsäuredimethylester oder Bernsteinsäure vorteilhaft einsetzbar. Werden nur Verbindungen (B1) mit Ethergruppen verwendet, entfällt der Neutralisationsschritt.

Im letzten Reaktionsschritt, bei dem im wässrigen Medium eine Molmassenerhöhung und die Ausbildung der erfindungsgemäßen Polyurethan-Dispersionen stattfindet, werden die Präpolymere aus (A) und (B ohne B6) gegebenenfalls unter starker Scherung wie z.B. starkem Rühren entweder in das Dispergierwasser, das das oder die Polyamine (B6) enthält, eingetragen oder man rührt umgekehrt die Dispergierwasser/Polyamine D-Mischung zu den Polyurethan-Lösungen aus (A) und (B ohne B6). Es erfolgt dann die Molmassenerhöhung durch Reaktion von noch vorhandenen Isocyanatgruppen der Umsetzungsprodukte aus (A) und (B ohne B6) mit den aminischen Wasserstoffen (B6). Außerdem bilden sich die erfindungsgemäßen Dispersionen aus. Die eingesetzte Menge an Polyamin (B6) hängt von den noch vorhandenen, nicht umgesetzten Isocyanatgruppen ab. Es kann dabei von Vorteil sein, nicht alle noch vorhanden Isocyanatgruppen mit Polyaminen (B6) umzusetzen, sondern nur einen Teil. Die nicht umgesetzten Isocyanatgruppen reagieren dann langsam mit Wasser ab. Bevorzugt werden mehr als 50%, besonders bevorzugt mehr als 75% der Iscyanatgruppen mit Polyaminen (B6) umgesetzt.

In einer Variante des Verfahrens werden mehr als 100%, eventuell bis 180%, bevorzugt allerdings 101 bis 120%, Amingruppen mit den zuvor nicht umgesetzten Isocyanatgruppen zur Reaktion gebracht. Es bleiben dann teilweise Amingruppen frei,

In einer Variante des Verfahrens kann auch zunächst der Dispergierschritt durchgeführt werden und anschließend wird Komponente (B6), vorteilhaft verdünnt in Wasser, zugegeben.

Falls erwünscht, kann das organische Lösungsmittel - sofern vorhanden - abdestilliert werden. Die Dispersionen haben dann einen Festkörpergehalt von 20 - 60 Gew.-%, insbesondere 30 - 55 Gew.-%.

Die erfindungsgemäßen Polyesteracrylaturethan-Dispersionen ergeben nach Verdunsten des Wassers bereits ohne Zugabe von Hilfsstoffen trockene bis harte und mechanisch belastbare Überzüge. Durch anschließende strahlenchemisch und/oder radikalisch induzierte Vernetzung härten die Filme zu besonders hochwertigen, kratzfesten und chemikalienresistenten Lacküberzügen aus.

Bei der strahlenchemisch induzierten Polymerisation (UV-, Elektronen-, Röntgenoder Gamma-Strahlen) ist die UV-Härtung besonders bevorzugt. Die UV-Härtung wird in Gegenwart von Fotoinitiatoren ausgelöst. Als Fotoinitiatoren eignen sich z.B. aromatische Ketonverbindungen wie Benzophenone, Alkylbenzophenone, 4,4'-Bis(dimethylamino)benzophenon (Michlers Keton), Anthron und halogenierte Benzophenone. Weiter geeignet sind Acylphosphinoxide z. B. 2,4,6-Trimethyl-benzoyldiphenylphosphinoxid, Phenylglyoxylsäureester, Anthrachinon und seine Derivate, Benzilketale und Hydroxyalkylphenone. Es können auch Gemische dieser Verbindungen eingesetzt werden.

Erfolgt die Härtung radikalisch, eignen sich wasserlösliche Peroxide oder wässrige Emulsionen nicht wasserlöslicher Initiatoren. Diese Radikalbildner können in bekannter Weise mit Beschleunigern kombiniert werden.

Die erfindungsgemäßen Polyurethan-Dispersionen lassen sich durch die üblichen Techniken auf unterschiedlichste Substrate applizieren wie beispielsweise durch Spritzen, Walzen, Rakeln, Gießen, Streichen oder Tauchen. Werden die erfindungsgemäßen Polyurethan-Dispersionen auf Holz appliziert, erhält man Oberflächen, die sich durch eine besonders anspruchsvolle Oberflächenoptik und Betonung der natürlichen Zeichnung des Holzes (Anfeuerung) hervorheben. Die erfindungsgemäßen Polyesterurethan-Dispersionen eignen sich daher besonders für Grundierungen z.B. bei der mehrschichtigen Lackierung von Fertigparkett. Die Grundierungen können anschließend mit anderen bei der Parkettlackierung üblichen Beschichtungsmitteln wie z.B. wässrigen UV-härtbaren Polyurethandispersionen oder 100 prozentigen UV-härtbaren Polyester- und/oder Urethan-acrylaten überlackiert werden.

Weiterhin können andere saugfähige Substrate wie Papier, Karton, Leder u. a. aber auch Metalle und Kunststoffe, sowie bereits beschichtete Substrate damit beschichtet werden.

Man kann die erfindungsgemäßen Polyesterurethan-Dispersionen als alleiniges Lackbindemittel einsetzen oder mit den in der Lacktechnologie bekannten Bindemitteln, Hilfsstoffen und Additiven, wie beispielsweise Dispersionen, Pigmente, Farbstoffe oder Mattierungsmittel versetzen bzw. kombinieren. Insbesondere sind Kombinationen mit anderen Polyurethandispersionen oder mit Polyacrylatdispersionen problemlos möglich.

### Beispiele:

### Beispiel 1

### Vergleichsbeispiel nach EP-A-0 753 531: Dispersion A

In einem Reaktionsgefäß mit Rührer, Innenthermometer und Gaseinleitung (Luftstrom 2 bis 3 l/h) werden 342,9 g Laromer® PE 44F (Polyesteracrylat; BASF AG, Ludwigshafen, DE), 57,1 g IRR 322 (Polyesteracrylat; UCB S.A., Drogenbos, BE), 10,4 g Neopentylglykol, 26,80 g Dimethylolpropionsäure, 0,6 g Dibutylzinndilaurat, 194,0 g Aceton vorgelegt, mit 102,1 g Desmodur® I (Isophorondiisocyanat; Bayer AG, Leverkusen, DE) und 50,4 g Desmodur® H (Hexamethylendiisocyanat; Bayer AG, Leverkusen, DE) versetzt und derart aufgeheizt, dass ein konstanter Aceton-Rückfluss herrscht. Es wird solange bei dieser Temperatur gerührt, bis die Reaktionsmischung einen NCO-Gehalt von 2,0 ± 0,1 Gew.-% enthält.

Dann wird auf 40 °C abgekühlt, und es werden schnell 20,2 g Triethylamin zugegeben. Nach 10 min wird die Reaktionsmischung unter schnellem Rühren in 1170,0 g Wasser von 20 °C gegossen. Nachdem sich die Dispersion ausgebildet hat, werden 10,2 g Ethylendiamin in 30,0 g Wasser zugefügt.

Nach 30 min Nachrühren ohne Heizen oder Kühlen wird das Produkt im Vakuum (50 mbar, max. 50 °C) destilliert, bis ein Festkörpergehalt von 37 ± 2 Gew.-% erreicht ist.

### Beispiel 2

### Erfindungsgemäße Dispersion B

In einem Reaktionsgefäß mit Rührer, Innenthermometer und Gaseinleitung (Luftstrom 2 bis 3 l/h) werden 342,9 g Laromer® PE 44F (Polyesteracrylat; BASF AG, Ludwigshafen, DE), 57,1 g IRR 322 (Polyesteracrylat; UCB S.A., Drogenbos, BE), 9,4 g Neopentylglykol, 1,8 g 2,2-Dimethyl-3-hydroxypropionsäure-(2,2-dimethyl-3-hydroxypropylester) (BASF AG, Ludwigshafen, DE), 26,80 g Dimethylolpropionsäure, 0,6 g Dibutylzinndilaurat, 194,0 g Aceton vorgelegt, mit 102,1 g Desmodur® I (Isophorondiisocyanat; Bayer AG, Leverkusen, DE) und 50,4 g Desmodur® H (Hexamethylendiisocyanat; Bayer AG, Leverkusen, DE) versetzt und derart aufgeheizt, dass ein konstanter Aceton-Rückfluss herrscht. Es wird solange bei dieser Temperatur gerührt, bis die Reaktionsmischung einen NCO-Gehalt von 2,0 ± 0,1Gew.% enthält.

Dann wird auf 40 °C abgekühlt, und es werden schnell 20,2 g Triethylamin zugegeben. Nach 10 min wird die Reaktionsmischung unter schnellem Rühren in 1170,0 g Wasser von 20 °C gegossen. Nachdem sich die Dispersion ausgebildet hat, werden 10,2 g Ethylendiamin in 30,0 g Wasser zugefügt.

Nach 30 min Nachrühren ohne Heizen oder Kühlen wird das Produkt im Vakuum (50 mbar, max. 50 °C) destilliert, bis ein Festkörpergehalt von 37 ±2 Gew.% erreicht ist.

### Beispiel 3

### Erfindungsgemäße Dispersion C

In einem Reaktionsgefäß mit Rührer, Innenthermometer und Gaseinleitung (Luftstrom 2 bis 3 l/h) werden 400,0 g des Polyesteracrylats Laromer® PE 44F (Polyesteracrylat; BASF AG, Ludwigshafen, DE), OH-Gehalt ca. 80 mg KOH/g, sowie10,4 g Neopentylglykol, 1,0 g 2,2-Dimethyl-3-hydroxypropionsäure-(2,2-dimethyl-3-hydroxypropylester) (BASF AG, Ludwigshafen, DE), 26,8 g Dimethylolpropionsäure, 0,6 g Dibutylzinndilaurat, 186,3 g Aceton vorgelegt, mit 101,8 g Desmodur® I (Isophorondiisocyanat; Bayer AG, Leverkusen, DE) und 51,1 g Desmodur® H (Hexamethylendiisocyanat; Bayer AG, Leverkusen, DE) versetzt und derart aufgeheizt, dass ein konstanter Aceton-Rückfluss herrscht. Es wird solange bei dieser Temperatur gerührt, bis die Reaktionsmischung einen NCO-Gehalt von 2,0 ± 0,1 Gew.% enthält.

Dann wird auf 40 °C abgekühlt, und es werden schnell 20,2 g Triethylamin zugegeben. Nach 10 min wird die Reaktionsmischung unter schnellem Rühren in 1030,0 g Wasser von 20 °C gegossen. Nachdem sich die Dispersion ausgebildet hat, werden 9,9 g Ethylendiamin in 30,0 g Wasser zugefügt.

Nach 30 min Nachrühren ohne Heizen oder Kühlen wird das Produkt im Vakuum (50 mbar, max. 50 °C) destilliert, bis ein Festkörper von38 ±2 Gew.% erreicht ist.

### Anwendungsbeispiele:

| | | A (Vergleich) | B | C |
|---|---|---|---|---|
| Festköpergehalt | 1) | 38,7 Gew.-% | 36,5 Gew.-% | 37,5 Gew.-% |
| pH-Wert | 2) | 8,6 | 8,7 | 8,6 |
| Viskosität | 3) | 25 mPas | 30 mPas | 26 mPas |
| Aussehen der Dispersion | 4) | Leicht kolloidal | Leicht kolloidal | Leicht kolloidal |
| Physikalische Antrocknung | 5) | 12 | 18 | 15 |
| Pendelhärte | 6) | a) 153 b) 143 c) 124 | a) 161 b) 146 c) 135 | a) 165 b) 165 c) 140 |
| Teilchengröße | 7) | 91 | 94 | 54 |
| Anfeuerung | 8) | 5 | 3 | 2 |
| Wasserfestigkeit | 9) | 0 | 0 | 0 |
| Ethanolfestigkeit | 10) | 0 | 0 | 0 |

| | | | | |
|---|---|---|---|---|
| 1) nach DIN EN ISO 3251 ( 1 g 125 °C) | | | | |
| 2) nach DIN 53785 | | | | |
| 3) Rotationsviskosimeter 23 °C | | | | |
| 4) Visuelle Beurteilung | | | | |
| 5) Bindemitteldispersion + 1,5 % Irgacure® 500 (Ciba Spezialitätenchemie, Lampertheim, DE); Nassfilm 150 µm; 60 min Trocknung bei 20 - 23°C; Pendelhärte nach König | | | | |
| 6) Bindemitteldispersion + 1,5 % Irgacure® 500 (Ciba Spezialitätenchemie, Lampertheim, DE); Nassfilm 150 µm; 60 min Trocknung bei 20 - 23°C; UV-Härtung Hg-Lampe 80 W/cm a) 3 m/min Vorschub ; b) 5 m/min Vorschub ; c) 10 m/min Vorschub; gemessen: Pendelhärte nach König | | | | |
| 7) Mittlere Teilchengröße nach Laser-Korrelations-Spektroskopie-Messung: Zetasizer 1000, Malvern Instruments, Malvern, UK | | | | |
| 8) Filmaufzug auf Nussbaum, s. Pkt. 6 ; Beurteilung visuell nach Noten : Note 0 = bestes Resultat; Note 5 = schlechtestes Resultat. Um eine bessere Vergleichbarkeit zu gewährleisten, wurden einige kommerziell erhältliche wässrige, strahlenhärtbare Bindemittel mitgeprüft und bewertet. 1. Laromer® PE 55W (Polyesteracrylat in Schutzkolloid Emulsion ohne physikalische Antrocknung, BASF AG, Ludwigshafen, DE): Anfeuerung Note 0; 2. IRR 400 (PU-Dispersion physikalisch antrocknend, UCB S.A., Drogenbos, BE): Anfeuerung Note 4; Ucecoat® DW 7770 (PU-Dispersion physikalisch antrocknend, UCB S.A., Drogenbos, BE): Anfeuerung Note 5; NeoRad® R450 (PU-Dispersion physikalisch antrocknend, Zeneca Resins, Waalwijk, NL): Anfeuerung Note 5. | | | | |
| 9) Kreuzaufzug mittels Kastenrakel; 2 * 150 µm Nassfilm auf Ahorn mit Zwischentrocknung und Zwischenschliff, s.Pkt. 6; Belastung 16 h. ( s.a. DIN 68861 ) | | | | |
| 10) s. Pkt. 9 | | | | |

Insbesondere der Vergleich der Dispersionen A und B zeigt, dass sich durch Einbau von kleinen Mengen 2,2-Dimethyl-3-hydroxypropionsäure-(2,2-dimethyl-3-hydroxypropylester) in Dispersion B eine deutlich verbesserte Anfeuerung auf Holz erzielen lässt, ohne auf gute physikalische Antrocknung zu verzichten.

## Patentansprüche

1. Strahlungshärtbare, wässrige Polyurethan-Dispersion enthaltend 0,05 - 20 Gew.-%, bezogen auf die nichtwässrigen Bestandteile der wässrigen Polyurethan-Dispersion, 2,2-Dimethyl-3-hydroxypropionsäure-(2,2-dimethyl-3-hydroxypropylester) (berechnet als M = 204,3) bzw. dessen Umsetzungsprodukte mit Isocyanat-haltigen Verbindungen.

2. Strahlungshärtbare, wässrige PU-Dispersionen gemäß Anspruch 1, **dadurch gekennzeichnet, dass** in den wässrigen Polyurethan-Dispersionen zum Aufbau des Polyurethans hydroxylgruppenhaltige Polyesteracrylate, Epoxyacrylate, Polyetheracrylate, Urethanacrylate oder ungesättige Polyester oder beliebige Mischungen dieser Verbindungen mit einem OH-Gehalt von 30 bis 300 mg KOH/g verwendet werden.

3. Strahlungshärtbare, wässrige PU-Dispersionen gemäß Anspruch 1, **dadurch gekennzeichnet, dass** in den wässrigen Polyurethan-Dispersionen zum Aufbau des Polyurethans hydroxylgruppenhaltige Polyesteracrylate, Epoxyacrylate, oder beliebige Mischungen dieser Verbindungen mit einem OH-Gehalt von 40 bis 200 mg KOH/g verwendet werden.

4. Verwendung strahlungshärtbarer, wässriger PU-Dispersionen gemäß Anspruch 1 zur Herstellung von Holzlacken.

5. Verfahren zur Herstellung von Beschichtungen auf Holzoberflächen, **dadurch gekennzeichnet, dass** die strahlungshärtbaren, wässrigen PU-Dispersionen gemäß Anspruch 1 als Bindemittel eingesetzt werden.

## Claims

1. Radiation-curable aqueous polyurethane dispersion containing 0.05 - 20% by weight, based on the non-aqueous constituents of the aqueous polyurethane dispersion, of 2,2-dimethyl-3-hydroxypropyl 2,2-dimethyl-3-hydroxypropionate (calculated as M = 204.3) and/or its reaction products with isocyanate-containing compounds.

2. Radiation-curable aqueous PU dispersions according to Claim 1, **characterized in that** in the aqueous polyurethane dispersions the polyurethane is synthesized using hydroxyl-containing polyester acrylates, epoxy acrylates, polyether acrylates, urethane acrylates or unsaturated polyesters or any mixtures of these compounds having an OH content of from 30 to 300 mg KOH/g.

3. Radiation-curable aqueous PU dispersions according to Claim 1, **characterized in that** in the aqueous polyurethane dispersions the polyurethane is synthesized using hydroxyl-containing polyester acrylates, epoxy acrylates or any mixtures of these compounds having an OH content of from 40 to 200 mg KOH/g.

4. Use of radiation-curable aqueous PU dispersions according to Claim 1 for preparing wood-coating materials.

5. Process for producing coatings on wood surfaces, **characterized in that** the radiation-curable aqueous PU dispersions according to Claim 1 are used as binders.

## Revendications

1. Dispersion de polyuréthane aqueuse, durcissable par rayonnement contenant 0,05 - 20 % en poids, rapporté aux constituants non aqueux de la dispersion de polyuréthane aqueuse, d'acide 2,2-diméthyl-3-hydroxypropionique (ester 2,2-diméthyl-3-hydroxypropylique) (calculé comme M = 204,3), respectivement ses produits de réaction avec des composés contenant des isocyanates.

2. Dispersions de PU aqueuses, durcissables par rayonnement selon la revendication 1, **caractérisées en ce qu'**on utilise dans les dispersions de polyuréthane aqueuses pour la formation du polyuréthane, comme composés contenant un groupe hydroxyle des polyesteracrylates, des époxyacrylates, des polyétheracrylates, des uréthaneacrylates ou des polyesters insaturés ou des mélanges quelconques de ces composés avec une quantité de OH de 30 à 300 mg KOH/g.

3. Dispersions de PU aqueuses, durcissables par rayonnement selon la revendication 1, **caractérisées en ce qu'**on utilise dans les dispersions de polyuréthane aqueuses pour la formation du polyuréthane, comme composés contenant un groupe hydroxyle des polyesteracrylates, des époxyacrylates, ou des mélanges quelconques de ces composés avec une quantité de OH de 40 à 200 mg KOH/g.

4. Utilisation de dispersions de PU aqueuses, durcissables par rayonnement selon la revendication 1 pour la préparation de vemis pour bois.

5. Procédé de préparation de revêtements de surfaces de bois, **caractérisé en ce qu'**on utilise comme liant les dispersions de PU aqueuses, durcissables par rayonnement selon la revendication 1.
